**Europäisches Patentamt**

**European Patent Office**

**Office européen des brevets**

(19)

(11) Veröffentlichungsnummer: **0 132 634**
**B1**

(12) # EUROPÄISCHE PATENTSCHRIFT

(45) Veröffentlichungstag der Patentschrift:
**08.04.87**

(51) Int. Cl.⁴: **H 01 G 1/11**

(21) Anmeldenummer: **84107715.9**

(22) Anmeldetag: **03.07.84**

(54) Elektrischer Kondensator mit Überdruckabreisssicherung.

(30) Priorität: **13.07.83 DE 3325343**

(43) Veröffentlichungstag der Anmeldung:
**13.02.85 Patentblatt 85/7**

(45) Bekanntmachung des Hinweises auf die Patenterteilung:
**08.04.87 Patentblatt 87/15**

(84) Benannte Vertragsstaaten:
**DE FR GB IT**

(56) Entgegenhaltungen:
**FR-A-2 428 310**

(73) Patentinhaber: **Siemens Aktiengesellschaft Berlin und München, Wittelsbacherplatz 2, D-8000 München 2 (DE)**

(72) Erfinder: **Erhardt, Werner, Dipl.- Ing., Triebweg 4, D-7901 Ballendorf (DE)**
Erfinder: **Hieber, Udo, Knupfertal 94, D-7920 Heidenheim (DE)**

EP 0 132 634 B1

**Beschreibung**

Die Erfindung betriff einen elektrischen Kondensator, insbesondere Leistungskondensator, mit Überdruckabreißsicherung, der in ein Gehäuse mit einem als Arbeitsmembran ausgebildeten kugelförmig nach innen gewölbten Boden eingebaut ist und bei dem zwischen Kondensatorwickel und Gehäuseboden eine Isolierscheibe angeordnet ist, die mit einem Ansatzstück in ein im Kondensatorwickel angeordnetes Kernrohr eingreift.

Ein derartiger Kondensator ist aus der FR-A 2 428 310 bekannt. Durch die Formgebung des Gehäusebodens als Arbeitsmembran wird bei auftretendem Überdruck im Gehäuse der Gehäuseboden ausgewölbt, wobei die im Gehäuseboden verankerte Überdruckabreißsicherung betätigt wird.

Es ist bekannt, daß beim Betrieb von insbesondere ölimprägnierten Leistungskondensatoren unter ungünstigen Bedingungen ein explosionsartiger Druckanstieg im Gehäuseinneren eintreten kann. Die Druckwelle, die sich dabei im Innern ausbreitet und die Verformung der Bodenmembrane bewirken soll, wird dabei durch das im Kernrohr angeordnete Isolier- Ansatzstück der Isolierscheibe in Richtung der Bodenmembran zwangsgeführt.

Bei explosionsartigen Druckanstieg hat sich herausgestellt, daß der Wirkungsquerschnitt offensichtlich zu klein ist, so daß das Kondensatorgehäuse in diesem Fall sich in unerwünschter Weise auswölbt.

Aufgabe der Erfindung ist es daher, einen elektrischen Kondensator der eingangs genannten Art anzugeben, bei dem bei einem explosionsartigen Druckaufbau im Innern des Kondensatorgehäuses die vorstehend aufgezeigten Schwierigkeiten umgangen werden.

Diese Aufgabe wird erfindungsgemäß dadurch gelöst, daß die Isolierscheibe zumindest zweiteilig ausgebildet ist.

Zweckmäßigerweise wird die dem Kondensatorwickel zugewandte Oberfläche der Isolierscheibe mit einer Riffelung versehen, wodurch eine zusätzliche Führung der Druckwelle erreicht wird.

Die Vorteile des Gegenstandes der Erfindung werden anhand der folgenden Ausführungsbeispiele näher erläutert.

In der dazugehörenden Zeichnung zeigen

Fig. 1 einen in ein Gehäuse eingebauten elektrischen Kondensator

Fig. 2 eine Ausführungsform einer zweiteiligen Isolierscheibe und

Fig. 3 eine Ausführungsform einer weiteren Isolierscheibe.

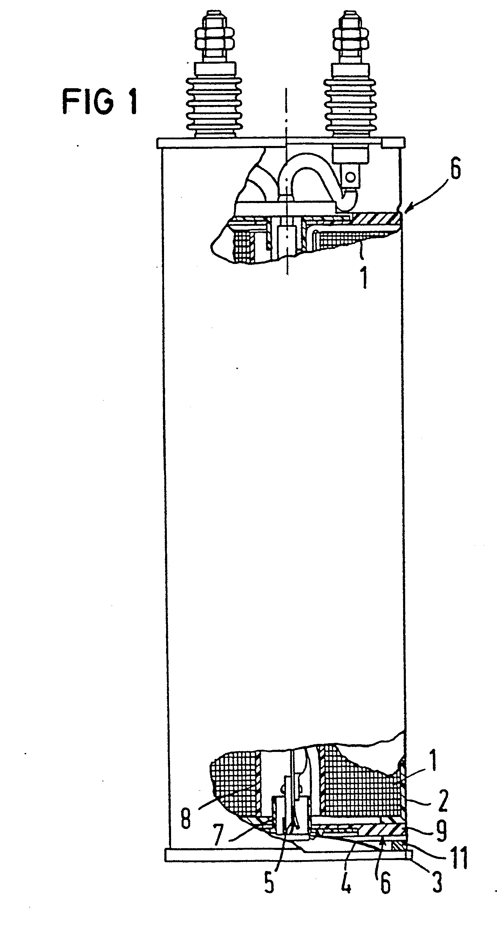

In der Fig. 1 ist ein Kondensatorwickel dargestellt, der in ein metallisches Gehäuse 2 eingebaut ist. Das Gehäuse 2 weist an seinem unteren Ende einen feststehenden Rand 3 auf.

Der Gehäuseboden 4 ist mit dem Gehäuse 2 am feststehenden Rand 3 durch Einfalzen dicht verbunden. In der Mitte des Gehäusebodens 4 ist eine Überdruckabreißsicherung 5 angeordnet. Der Gehäuseboden 4 ist als stabile kugelförmige Schale ausgebildet, wobei die Wölbung ins Innere des Gehäuses 2 gerichtet ist.

Der Kondensatorwickel 1 ist gegenüber dem Gehäuseboden 4 durch eine Isolierscheibe 6 getrennt. Die Isolierscheibe 6 besteht hier z.B. aus zwei Teilen, nämlich dem Teil 7, der in das im Kondensatorwickel angeordnete Kernrohr 8 hineinragt und der Kreisringscheibe 9. Am oberen Ende der Kondensatorwickel kann eine weitere Isolierscheibe 6 angeordnet sein.

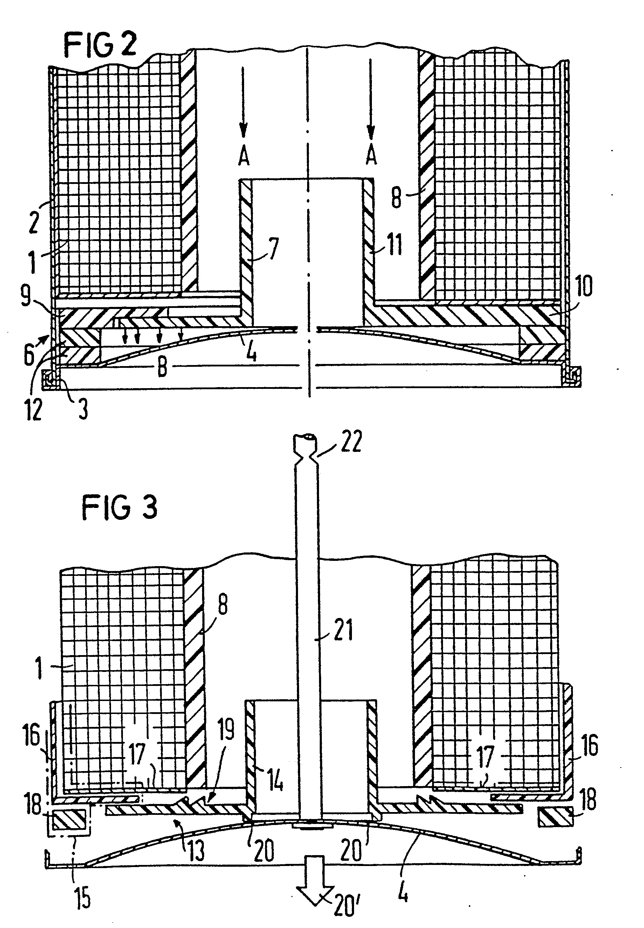

In der Fig. 2 ist ein vergrößerter Ausschnitt des Kondensatorgehäuses 2 im Bereich des Gehäusebodens 4 dargestellt. Zum Vergleich ist in der rechten Hälfte der Fig. 2 eine bisher verwendete einteilige Isolierscheibe 10 dargestellt, wogegen in der linken Hälfte die erfindungsgemäße zumindest zweigeteilte Isolierscheibe 6 dargestellt ist. Die Druckrichtung bei einem explosionsmäßigen Druckaufbau im Innern des Kondensatorgehäuses ist durch die Pfeile A angegeben. Es ist zu erkennen, daß im Fall der herkömmlichen Isolierscheibe (rechte Bildseite) der Druck nur durch das Innere des Ansatzstückes 11 an die Arbeitsmembran 4 gelangt. Dagegen ist im linken Teil der Fig. 2 zu erkennen, daß durch die erfindungsgemäße Ausbildung der Isolierscheibe 6 durch Druckanwendung der kreisringförmige Teil 9 von dem mit dem Ansatzteil 7 verbundenen Stück in Richtung der Pfeile B getrennt wird, wodurch einerseits das ganze mit dem Teil 7 verbundene Stück der Isolierscheibe gegen den Gehäuseboden 4 gedrückt wird und andererseits zusätzlicher Druckausgleich zwischen den Teilen 7 und 9 hindurch in Richtung das Gehäusebodens 4 erfolgen kann.

Zur Führung der Druckwelle ist es vorteilhaft, wenn an der Oberfläche der Isolierscheibe, die dem Kondensatorwickel 1 zugewandt ist, eine Riffelung angeordnet ist.

Bei einem Ausführungsbeispiel weist das an der Isolierscheibe angeordnete rohrförmige Ansatzstück 7 einen Durchmesser von 33 mm auf und der Durchmesser der Membrane 4 beträgt 170 mm. Es ergibt sich somit ein Querschnittsverhältnis Rohr-Durchmesser zu Membrane-Durchmesser von 855 mm$^2$ zu 22.600 mm$^2$ oder 1:26. Es ist ersichtlich, daß die Ausbreitung der Druckwelle durch das Kernloch in den Boden bzw. Deckelbereich des Gehäuses gebremst und die Ansprechzeit für die Abreißsicherung verlängert wird.

Bei der erfindungsgemäßen Isolierscheibe 6 kann die Teilung zwischen Kreisringabschnitt 9 und rohrförmigen Ansatzstück 7 beispielsweise so vorgenommen werden, daß sich ein wirksamer Durchmesser des Ansatzstückes 7 von 75 mm ergibt. Dadurch wird der Strömungsquerschnitt auf ca. 4420 mm$^2$ vergrößert und das Querschnittsverhältnis auf ca. 1:5 verbessert.

Wenn die mehrgeteilte Isolierscheibe auch am oberen Ende des Wickelpaketes eingesetzt wird, kann bei einer Explosion die Druckwelle zusätzlich auch an der oberen Isolierscheibe wirksam werden und die Sicherung schneller abreißen. Der zur Wirkung kommende Strömungsquerschnitt wird dadurch nochmals auf das Doppelte, also von 4420 auf 8840 mm$^2$ vergrößert, was einer Verbesserung des Querschnittsverhältnisses auf ca. 1:2,5 entspricht. Die Sicherung ist dann zwischen zwei beweglichen Isolierscheiben eingespannt, wobei die Scheiben als Prallplatten für die Druckwelle wirken.

Zur Abstützung der Isolierscheibe 6 können am Boden des Kondensatorgehäuses 2 Stützringe 12 angeordnet werden.

Die erfindungsgemäße Isolierscheibe erhöht die Sicherheit der Kondensatoren gegen eine Zerstörung des Kondensatorgehäuses und den damit verbundenen Ölaustritt.

In der Fig. 3 ist eine weitere Ausführungsform einer Isolierscheibe 13 dargestellt. Diese Isolierscheibe 13 besteht aus einem rohrförmigen Ansatzstück 14, das im Kernrohr 8 des Kondensatorwickels 1 angeordnet ist und einem weiteren Isolierstück 15, das als Einzelteil ausgebildet ist, oder aus mehreren Teilen bestehen kann. Das Isolierstück 15 besteht aus einem Teil 16, das zur Isolierung insbesondere der Schoopschicht 17 gegenüber dem Kondensatorgehäuse dient und zur Zentrierung des Wickels 1 seitlich hochgezogen sein kann und dem Distanzierteil 18, das das Abheben des Ansatzstückes 14 ermöglicht. An der dem Wickel zugewandten Oberfläche des Ansatzstückes 14 ist eine Riffelung 19 angeordnet, die eine zusätzliche Führung der Druckwelle bewirkt. An der Unterseite des Ansatzstückes 14 sind Erhebungen 20 angeordnet, die eine Lageveränderung des Ansatzstückes 14 in Richtung des Pfeils 20 ohne Verzogerung auf die Arbeitsmembran 4 mechanisch weitergeben, so daß die Abreißsicherung 21 mit der Sollbruchstelle 22 ansprechen kann.

## Patentansprüche

1. Elektrischer Kondensator, insbesondere imprägnierter Leistungskondensator, mit Überdruckabreißsicherung (5, 21), der in ein Gehäuse (2) mit einem als Arbeitsmembran ausgebildeten kugelförmig nach innen gewölbten Boden (4) eingebaut ist und bei dem zwischen Kondensatorwickel (1) und Gehäuseboden eine Isolierscheibe (6) angeordnet ist, die mit einem Ansatzstück (7, 14) in ein im Kondensatorwickel angeordnetes Kernrohr (8) eingreift, <u>dadurch gekennzeichnet</u>, daß die Isolierscheibe (6) zumindest zweiteilig ausgebildet ist.

2. Elektrischer Kondensator nach Anspruch 1, <u>dadurch gekennzeichnet</u>, daß die dem Kondensatorwickel (1) zugewandte Oberfläche der Isolierscheibe (6, 13) mit einer Riffelung (19) versehen ist.

3. Elektrischer Kondensator nach Anspruch 1 oder 2, <u>dadurch gekennzeichnet</u>, daß an der Unterseite der Isolierscheibe (6, 13) Erhebungen (20) angeordnet sind.

## Claims

1. An electrical capacitor, particulary but not exclusively an impregnated power capacitor, having an excess pressure cut-out safety device (5, 21) and which is installed in a housing (2) having a base (4) which serves as operating diaphragm and is curved spherically inwardly and where an insulating plate (6) is arranged between the capacitor winding (1) and the base of the housing and engages by means of an attached piece (7, 14) into an inner tube (8) arranged in the capacitor winding, <u>characterised in</u> that the insulating plate (6) consists of at least two parts.

2. An electrical capacitor as claimed in Claim 1, <u>characterised in</u> that that surface of the insulating plate (6, 13) which faces towards the capacitor winding (1) is provided with a fluting (19).

3. An electrical capacitor as claimed in Claim 1 or Claim 2, <u>characterised in</u> that raised portions (20) are provided on the underside of the insulating plate (6, 13).

## Revendications

1. Condensateur électrique, notamment condensateur de puissance imprégné, comportant un dispositif (5, 21) de sécurité à rupture en cas de surpression, qui est monté dans un boîtier (2) comportant un fond (4) bombé vers l'intérieur en forme de sphère et réalisé sous la forme d'une membrane de travail, et dans lequel se trouve disposé, entre l'enroulement (1) du condensateur et le fond du boîtier un disque isolant (6) qui s'engage par un embout (7, 14) dans un tube intérieur (8) disposé dans l'enroulement du condensateur, caractérisé par le fait que le disque isolant (6) est réalisé au moins en deux éléments.

2. Condensateur électrique suivant la revendication 1, caractérisé par le fait que la surface du disque isolant (6, 13), tournée vers l'enroulement (1) du condensateur est munie de nervures (19).

3. Condensateur électrique suivant la revendication 1 ou 2, caractérisé par le fait que des renflements (20) sont disposés sur la face inférieure du disque isolant (6, 13).

FIG 1

FIG 2

FIG 3